Europäisches Patentamt

(19) European Patent Office

Office européen des brevets

(11) Veröffentlichungsnummer: **0 001 572**
**B1**

(12) EUROPÄISCHE PATENTSCHRIFT

(45) Veröffentlichungstag der Patentschrift:
16.12.81

(51) Int..Cl.³· **F 16 B 39/282**

(21) Anmeldenummer: 78101024.4

(22) Anmeldetag: 29.09.78

(54) Selbstsichernde Kopfschraube oder Mutter.

(30) Priorität: 15.10.77 DE 2746400

(43) Veröffentlichungstag der Anmeldung:
02.05.79 Patentblatt 79/9

(45) Bekanntmachung des Hinweises auf die Patenterteilung:
16.12.81 Patentblatt 81/50

(84) Benannte Vertragsstaaten:
CH DE FR GB NL SE

(56) Entgegenhaltungen:
AT-B-27 044
DE-A-1 625 284
DE-A-2 042 680
DE-A-2 065 204
DE-C-1 153 946
FR-A-796 503
GB-A-775 724
US-A-3 241 589
US-A-3 752 203

(73) Patentinhaber: RICHARD BERGNER GMBH & CO,
Bahnhofstrasse 8-16, D-8540 Schwabach (DE)

(72) Erfinder: Pfaff, Helmut, Am Hohen Hof 5,
D-8540 Rednitzhembach (DE)

(74) Vertreter: Tergau, Enno et al,
Hefnersplatz 3 Postfach 9347, D-8500 Nürnberg 11 (DE)

BUNDESDRUCKEREI BERLIN

## Selbstsichernde Kopfschraube oder Mutter

Die Erfindung betrifft eine selbstsichernde Kopfschraube oder Mutter mit den Merkmalen des Oberbegriffs des Patentanspruches 1.

Bei einer bekannten Schraube bzw. Mutter der eingangs genannten Art ist der umfangsseitige Teil der Auflagefläche als durchgehender, konischer Ringflansch ausgebildet, der beim Einschrauben der Schraube bzw. Aufschrauben der Mutter die Eindringtiefe der Sperrzähne in das Werkstück begrenzt (DE-OS 2 308 557). Durch diese Begrenzung der Eindringtiefe der Sperrzähne in das Werkstück eignet sich eine solche Schraube bzw. Mutter insbesondere zur Befestigung dünner Bleche, bei denen eine größere Eindringtiefe der Sperrzähne zum Auftreten von Dauerbruch im Beaufschlagungsbereich des Schraubenkopfes oder der Mutter führen würde.

Die bekannte Ausbildung der Auflagefläche des Kopfes ist herstellungstechnisch aufwendig, weil zwischen dem Schraubenschaft und dem Ringflansch sowie den Sperrzahnkämmen jeweils die Zahnlücken bildende, nur zur Auflagefläche hin offene Ausnehmungen zu formen sind.

Darüber hinaus ist aus DE-A-2 042 680 eine selbstsichernde Schraube, Mutter od. dgl. bekannt, die zur Erhöhung der Reibmomente zwischen Auflagefläche des Mutterkopfes bzw. der Unterlage die Auflagefläche bzw. Teile der Auflagefläche exzentrisch ausgebildet sind. Dadurch ergeben sich beim Anziehen des Befestigungselementes in den einzelnen Teilen der Auflagefläche verschiedene Flächenpressungen, die entsprechend der Exzentrizität sich in verschieden langen Hebelarmen auswirken, so daß über den Umfang verteilt verschieden große Einzelreibmomente auftreten. Diese Schraube ist allerdings mit dem Nachteil behaftet, daß im Auflagebereich eine Nut vorgesehen ist, die die Auflage der Zähne unterbricht und damit ein Eindringen der Zähne in die Werkstückoberfläche begünstigt. Das führt zu einer Erhöhung der Kerbwirkung und damit zu einer Erhöhung der Dauerbruchgefahr.

Der Erfindung liegt demgegenüber die Aufgabe zugrunde, eine Kopfschraube oder Mutter zu schaffen, die mit den bekannten Ausbildungen vergleichbare oder sogar noch verbesserte Wirkungen bezüglich der Vermeidung von Dauerbruchgefahr im Kopfauflagebereich gewährleistet, jedoch einfacher herzustellen ist. Diese Aufgabe wird mit den Merkmalen des Kennzeichens des Anspruches 1 gelöst.

Durch die Erfindung reichen die Sperrzahnkämme bis in den Umfangbereich der Auflagefläche. Die Anformung eines sich an die äußeren Enden der Sperrzahnkämme anschließenden, durchgehenden Ringflansches ist nicht nötig. Trotzdem wird durch die erfindungsgemäße Ausbildung die Eindringtiefe der Sperrzahnkämme mit zunehmender Annäherung an den kritschen Rand der Auflagefläche immer geringer. Versuche haben ergeben, daß nach dem Verspannen der Schraube am Werkstück eine besonders saubere und gleichmäßige Auflagefläche entsteht und eine Dauerbruchgefahr im Auflagebereich der Schraube bzw. Mutter nicht gegeben ist.

Vorteilhaft sind in an sich bekannter Weise die Sperrzähne sägezahnartig ausgebildet. In besonders einfacher Weise läßt sich die erfindungsgewollte Wirkung durch das Kennzeichen des Anspruches 4 fertigungstechnisch verwirklichen. Durch das Merkmal des Anspruches 7 pflanzt sich das Rippen- bzw. Zahnprofil bis in den Umfangsbereich der Auflagefläche fort.

Der Gegenstand der Erfindung wird anhand der Figuren näher erläutert. Es zeigt

Fig. 1 die Seitenansicht einer Kopfschraube,

Fig. 2 eine vergrößerte Schnittdarstellung entsprechend der Linie II-II in Fig. 1,

Fig. 3 einen Teil-Schnitt etwa entsprechend der Linie III-III in Fig. 2,

Fig. 4 eine Draufsicht auf die Auflagefläche analog Fig. 2,

Fig. 5 eine Schnittdarstellung entsprechend der Linie V-V in Fig. 4,

Fig. 6 die vergrößerte Darstellung des Sperrzahnprofils als Abwicklung des Umfanges der Auflagefläche entsprechend Pfeil VI in Fig. 5,

Fig. 7 eine vergrößerte Darstellung der Schraubenkopfunterseite mit der Sperrverzahnung analog Fig. 3,

Fig. 8 eine Darstellung analog Fig. 7 der Sperrverzahnung gemäß Fig. 5.

Die Auflagefläche 1 des Schraubenkopfes 2 bzw. einer Mutter (nicht dargestellt) ist mit einer Vielzahl von nach Art eines Strahlenkranzes im wesentlichen radial verlaufenden, vorzugsweise sägezahnartigen und bis zum Außenumfang 3 der Auflagefläche 1 reichenden Sperrzähnen 4 versehen. Die Kämme 5 der Sperrzähne 4 verlaufen mit ihrem inneren Teil 6 in einer zur Schraubenachse 7 rechtwinklig ausgerichteten Ebene 8. Mit ihrem äußeren Teil 9 sind die Sperrzahnkämme 5 gegenüber ihrem inneren Teil abgeknickt. Dabei liegt der äußere Teil der Sperrzahnkämme 5 etwa in der Mantelfläche eines mit seiner Spitze 10 auf die Gegenfläche am Werkstück zu gerichteten Flachkegels 11.

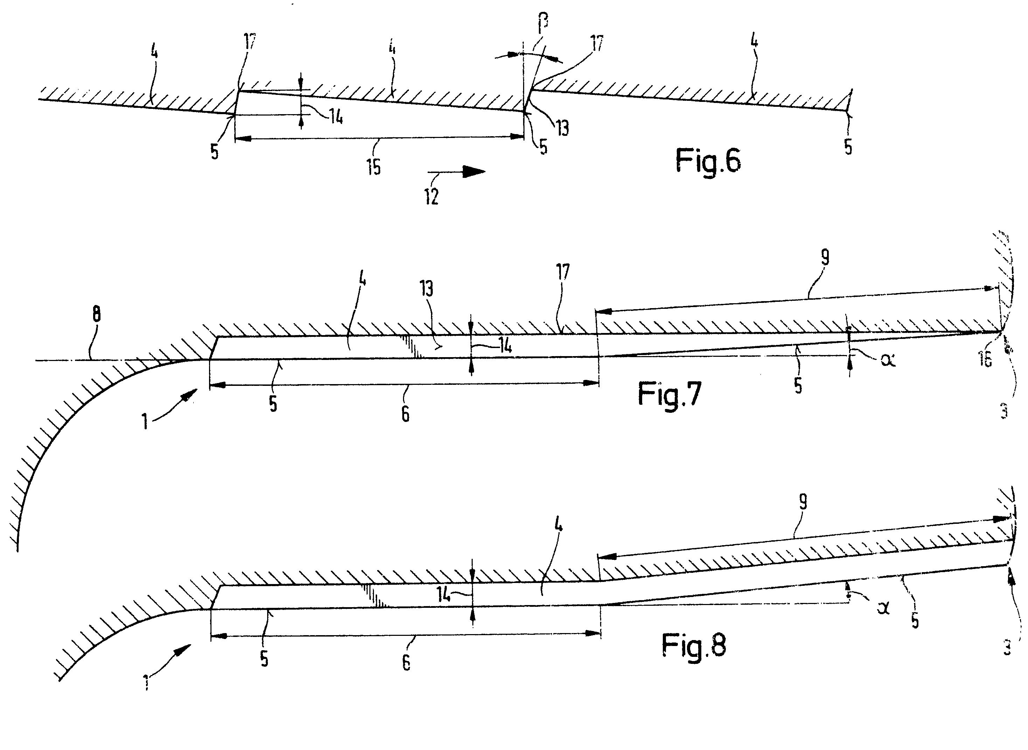

Die Sperrzähne 4 sind in an sich bekannter Weise sägezahnartig ausgebildet und dabei so ausgerichtet, daß sie beim Lösen schneidend in die Gegenfläche am Werkstück eingreifen. Die Löserichtung ist in Fig. 6 mit dem Pfeil 12 gekennzeichnet. Der Neigungswinkel $\beta$ der Zahnbrust 13 beträgt zwischen 0 und 30°. Das Verhältnis von Zahnhöhe 14 zu am Außenumfang 3 in Umfangsrichtung gemessener Zahnlänge 15 ist kleiner als 1 : 5, vorzugsweise bis 1 : 20.

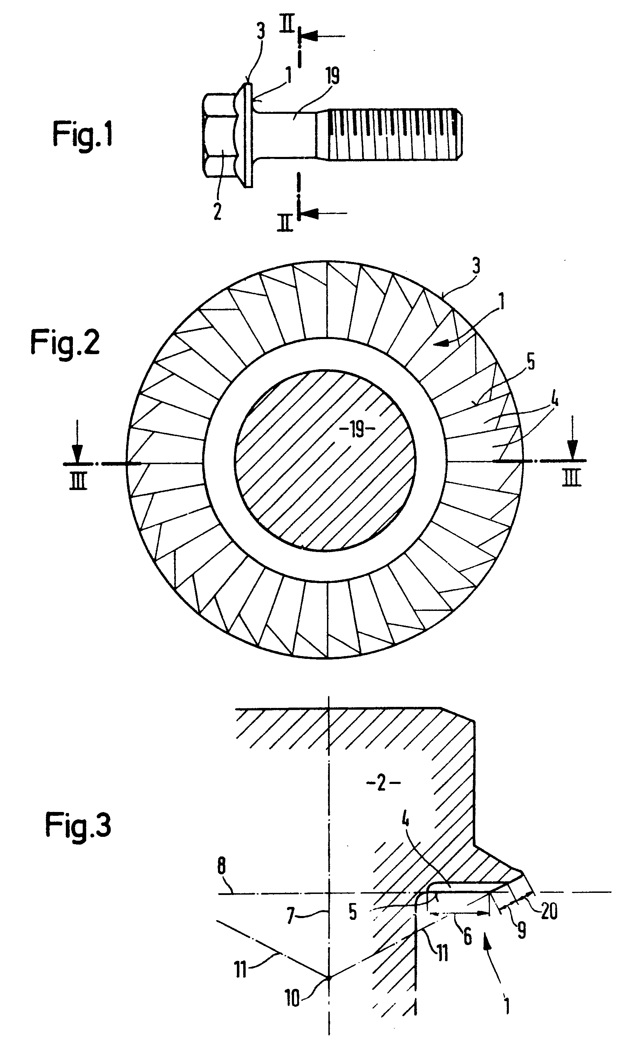

Der äußere Teil 9 der Sperrzahnkämme 5 in den Ausführungsformen gemäß Fig. 2, 3 und 7 ist Teil einer umlaufenden Faskante, deren innerer Teil an die äußeren Enden der in der Ebene 8 verlaufenden inneren Teile 6 der Sperrzahnkämme 5 angrenzt. Die Faskante verläuft auf dem Mantel des Flachkegels 11. Sie erreicht an ihrem äußeren Ende 16, d. h. am Außenumfang 3 der Auflagefläche 1 in den Bereich der Sperrzahnfußkanten 17, die über ihre gesamte Länge parallel zur Ebene 8 und damit ebenfalls rechtwinklig zur Schraubenachse 7 bzw. zum Schraubenschaft 19 verlaufen. Der Neigungswinkel $\alpha$ des äußeren Teiles 9 der Sperrzähne 4 beträgt maximal um 30°, ist jedoch in der Regel kleiner. Der äußere Teil 9 der Sperrzahnkämme kann auch schon vor Erreichung des Außenumfanges 3 in einer Distanz vom Außenumfang 3 enden, die mit der radialen Breite einer Abstützfläche 20 übereinstimmt.

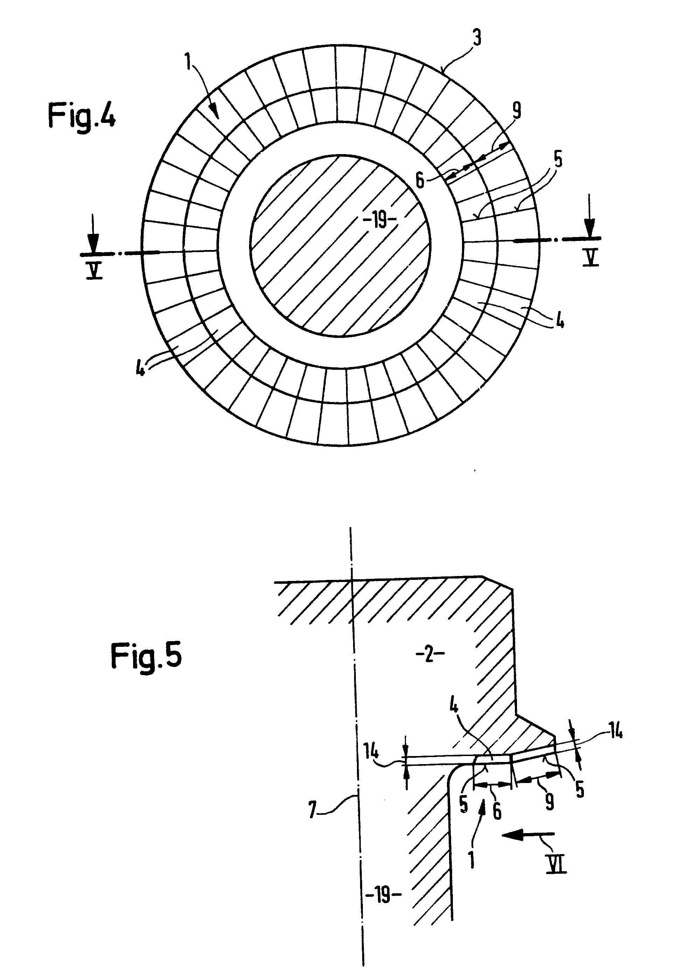

Bei der Ausführungsform gemäß Fig. 4, 5 und 8 weisen die Sperrzähne 4 über ihre gesamte Länge, d. h. sowohl im inneren Teil 6 als auch im äußeren Teil 9, eine gleichbleibende Zahnhöhe 14 auf. Der Flachkegel 11 ist hier eine Hüllfläche. Der äußere Teil 9 der Sperrzahnkämme 5 weist bei beiden Ausführungsformen mindestens ein Zehntel der Länge des inneren Teiles 6 auf.

**Patentansprüche**

1. Selbstsichernde Kopfschraube oder Mutter, deren ringförmige Auflagefläche einen inneren, rechtwinklig zur Achse (7) verlaufenden Teil (1) und in Radialrichtung nach außen daran ohne Unterbrechung anschließend einen diesen konzentrisch umgebenden äußeren, flachkegelförmigen Teil (9) aufweist, dessen Kegelspitze (10) auf die Gegenfläche am Werkstück gerichtet ist, wobei die Hüllfläche des inneren Teiles (6) durch die Kämme (5) einer Vielzahl von nach Art eines Strahlenkranzes im wesentlichen radial verlaufenden, im Querschnitt rippenartigen und insbesondere beim Lösen schneidend in die Gegenfläche am Werkstück eingreifenden Sperrzähnen (4) gebildet ist, dadurch gekennzeichnet, daß die Sperrzahnkämme (5) sich ohne Unterbrechung über den äußeren Teil (9) der Auflagefläche fortsetzen derart, daß dort dessen Flachkegelform in an sich bekannter Weise die gemeinsame Hüllfläche für die Sperrzahnkämme (5) bildet.

2. Kopfschraube oder Mutter nach Anspruch 1, dadurch gekennzeichnet, daß die Sperrzähne (4) in an sich bekannter Weise sägezahnartig ausgebildet sind.

3. Kopfschraube oder Mutter nach Anspruch 1, dadurch gekennzeichnet, daß die Mantelfläche des Flachkegels (11) leicht konvex ausgebildet ist.

4. Kopfschraube oder Mutter nach mindestens einem der Ansprüche 1 bis 3, dadurch gekennzeichnet, daß der äußere Teil (9) der Sperrzahnkämme (5) Teil einer umlaufenden an den sonst ausschließlich rechtwinklig zur Schraubenachse (7) verlaufenden Sperrzähnen (4) angebrachten Faskante ist.

5. Kopfschraube oder Mutter nach Anspruch 4, dadurch gekennzeichnet, daß die Faskante an ihrem äußeren Ende in den Bereich der Sperrzahnfußkanten (17) reicht.

6. Kopfschraube oder Mutter nach Anspruch 4, dadurch gekennzeichnet, daß die Zahnhöhe am Außenumfang des äußeren Teiles (9) Null ist und daß sich an dem äußeren Teil (9) nach außen hin eine Abstützfläche (20) anschließt, die in der flachkegelförmigen Hüllfläche der Sperrzahnkämme (5) verläuft.

7. Kopfschraube oder Mutter nach Anspruch 1 oder 2, dadurch gekennzeichnet, daß auch im äußeren Teil (9) der Auflagefläche die Sperrzähne (4) über ihre gesamte Länge eine etwa gleichbleibende Zahnhöhe (14) aufweisen.

8. Kopfschraube oder Mutter nach einem oder mehreren der vorhergehenden Ansprüche, dadurch gekennzeichnet, daß der äußere Teil (9) der Sperrzahnkämme (5) mindestens ein Zehntel der Länge des inneren Teiles (6) aufweist.

9. Kopfschraube oder Mutter nach einem oder mehreren der vorhergehenden Ansprüche, dadurch gekennzeichnet, daß das Maß der Abknickung bis 30° gegenüber der rechtwinklig zur Schraubenachse (7) verlaufenden Ebene beträgt.

**Claims**

1. A self-locking bolt or nut of which the annular contact surface comprises an inner part (1) extending at right angles to its axis (7) and an outer, shallow-conical part (9) contiguous to, extending radially outward from, and concentrically surrounding said inner part, the apex (10) of the cone defining said outer part being directed towards the cooperating surface of the workpiece and the envelope surface of sais inner part (6) being formed by the crests (5) of a plurality of locking teeth (4) which extend substantially radially in the manner of a radial crown, are of rib-shaped cross-section and are, especially during loosening, arranged to make cutting engagement into the opposing surface of the workpiece, characterised in that the crests (5) of the locking teeth extend uninterruptedly over the outer part (9) of the contact surface in such a manner that the shallow-conical shape thereof, known per se, is formed by the common envelope surface of the crests (5) of the locking teeth.

2. A bolt or nut according to claim 1, characterised in that the locking teeth (4) are of saw-toothed construction, known per se.

3. A bolt or nut according to claim 1, characterised in that the envelope surface of the shallow cone (11) is formed slightly convex.

4. A bolt or nut according to at least one of claims 1 to 3, characterised in that the outer part (9) of the crests (5) of the locking teeth is part of a surrounding bevelled edge provided on the locking teeth (4) which otherwise extend exclusively at right angles to the thread-axis (7).

5. A bolt or nut according to claim 4, characterised in that, at its outer end, the bevelled edge extends into the region of the root-edges (17) of the locking teeth.

6. A bolt or nut according to claim 4, characterised in that the tooth-height is zero at the outer circumference of the outer part (9) and that there is connected with the outer part (9) an outwardly extending abutment surface (20), which extends in the shallow-cone-shaped envelope surface of the crests (5) of the locking teeth.

7. A bolt or nut according to claim 1 or 2 characterised in that the locking teeth (4) comprise a substantially constant tooth-height (14) over their entire length, including the portions in the cuter part (9) of the contact surface.

8. A bolt or nut according to one or more of the preceding claims, characterised in that the outer part (9) of the crests (5) of the locking teeth is at least one tenth of the length of the inner part (6).

9. A bolt or nut according to one or more of the preceding claims, characterised in that the angle of cut is up to 30° with respect to the plane extending at right angles to the thread axis (7).


**Revendications**

1. Vis à tête ou écrou auto-freiné dont la surface de portée annulaire présente une partie intérieure (1) perpendiculaire à l'axe (7) et, à la suite de cette partie intérieure dans la direction radiale, sans interruption, une partie extérieure (9) en forme de cône aplati, qui entoure concentriquement cette partie intérieure et dont la pointe (10) du cône est dirigée vers la surface conjuguée portée par la pièce, la surface enveloppe de la partie intérieure (6) étant formée par les crêtes (5) d'un grand nombre de dents d'arrêt (4) qui s'étendent sensiblement radialement à la façon d'une couronne de rayon présentent en coupe une forme de côte et, en particulier, s'engagent dans la surface conjuguée portée par la pièce avec un effet de coupe lors du desserrage, caractérisé en ce que les crêtes (5) des dents d'arrêt se prolongent sans interruption sur la partie extérieure (9) de la surface de portée de telle sorte que, là, la forme de cône aplati de cette partie extérieure forme d'une façon connue la surface enveloppe commune des crêtes (5) des dents d'arrêt.

2. Vis à tête ou écrou suivant la revendication 1, caractérisé en ce que les dents d'arrêt (4) sont d'une configuration en dents de scie, d'une façon connue.

3. Vis à tête ou écrou suivant la revendication 1, caractérisé en ce que la surface latérale du cône aplati (11) est de configuration légèrement convexe.

4. Vis à tête ou écrou suivant au moins l'une des revendications 1 à 3, caractérisé en ce que la partie extérieure (9) des crêtes (5) des dents d'arrêt fait partie d'un bord chanfreiné périphérique qui est formé sur les dents d'arrêt (4) qui, par ailleurs, s'étendent exclusivement perpendiculairement à l'axe (7) de la vis.

5. Vis à tête ou écrou suivant la revendication 4, caractérisé en ce qu'à son extrémité extérieure, le bord chanfreiné atteint la région des arêtes (17) des pieds des dents d'arrêt.

6. Vis à tête ou écrou suivant la revendication 4, caractérisé en ce que la hauteur des dents est nulle à la périphérie extérieure de la partie extérieure (9) et en ce qu'à la partie extérieure (9) fait suite, de l'intérieur vers l'extérieur une surface d'appui (20) qui s'étend dans la surface enveloppe en forme de cône aplati des crêtes (5) des dents d'arrêt.

7. Vis à tête ou écrou suivant la revendication 1 ou 2, caractérisé en ce que les dents d'arrêt (4) présentent une hauteur de dents à peu près constante (14) sur toute leur longueur, également dans la partie extérieure (9) de la surface de portée.

8. Vis à tête ou écrou suivant l'une quelconque des revendications précédentes, caractérisé en ce que la partie extérieure (9) des crêtes (5) des dents d'arrêt représente au moins un dixième de la longueur de la partie intérieure (6).

9. Vis à tête ou écrou suivant l'une ou plusieurs des revendications précédentes, caractérisé en ce que la valeur de l'inclinaison atteint jusqu'à 30° par rapport au plan qui s'étend perpendiculairement à l'axe (7) de la vis.

**Fig.1**

**Fig.2**

**Fig.3**

Fig.4

Fig.5

Fig.6

Fig.7

Fig.8

0 001 572